# EUROPEAN PATENT SPECIFICATION

(11) **EP 3 834 601 B1**
(45) Date of publication and mention of the grant of the patent: **26.06.2024**
(21) Application number: 19847999.0
(22) Date of filing: 11.06.2019
(51) Int. Cl.: G05D 1/648, G05D 1/81, G05D 105/15, G05D 107/20, G05D 109/10

(54) **HARVESTER, HARVESTING SYSTEM, HARVESTING METHOD, HARVESTING PROGRAM AND RECORDING MEDIUM**
ERNTEMASCHINE, ERNTESYSTEM, ERNTEVERFAHREN, ERNTEPROGRAMM UND AUFZEICHNUNGSMEDIUM
MOISSONNEUSE, SYSTÈME DE RÉCOLTE, PROGRAMME DE RÉCOLTE, ET SUPPORT D'ENREGISTREMENT

(30) Priority: 07.08.2018 JP 2018148751
(43) Date of publication of application: 16.06.2021
(73) Proprietor: Kubota Corporation, Osaka 556-8601 (JP)
(72) Inventor: SAKAGUCHI Kazuo, Amagasaki-shi, Hyogo 661-0967 (JP); SANO Tomohiko, Amagasaki-shi, Hyogo 661-0967 (JP); YOSHIDA Osamu, Amagasaki-shi, Hyogo 661-0967 (JP); NAKABAYASHI Takashi, Sakai-shi, Osaka 590-0823 (JP)
(74) Representative: Cabinet Beau de Loménie
(86) International application number: PCT/JP2019/023118
(87) International publication number: WO 2020/031494

(56) References cited:
- EP-A1- 3 351 903
- WO-A1-2017/154715
- WO-A1-2018/101351
- WO-A1-2018/101351
- JP-A- 2017 123 829
- JP-A- 2018 116 615
- US-A1- 2005 273 253
- US-A1- 2015 331 423

## Description

### TECHNICAL FIELD

The present invention relates to a harvester capable of manual traveling by manual operation and an automated traveling involving causing a machine body to follow a preset traveling route. The invention relates also to a harvesting system, a harvesting method, a harvesting program as well as a recording medium.

### RELATED ART

An agricultural work vehicle such as a harvester is required, in order to carry out a farming work in a farmland, to travel as much as possible along a field row, i.e. a row of planted agricultural produces (plants) in the farmland. For this reason, a traveling route of the agricultural work vehicle normally comprises combination of a straight traveling and a turning traveling as "transition" to the straight traveling subsequent thereto. In the automated traveling of the agricultural work vehicle, automated steering is more difficult for the turning traveling than for the straight traveling. Thus, it is advantageous to employ selectively an automated steering for the straight traveling and a manual steering for the turning traveling.

For the reason mentioned above, for a rice planter having automated traveling ability as disclosed in Patent Document 1, for instance, a work traveling involving seedling planting work along a straight route and a turning traveling effected in vicinity of a levee as transition to a straight route for a next seedling planting work traveling are carried out in alternation. In this, the first straight route is a "teaching route" in which the vehicle is caused to travel with manual steering. Subsequent straight route(s) is (are) set parallel with the teaching route with a predetermined working width spacing relative to each other. In operation, a driver will place the rice planter at a start point within the field and then operate a start point setting switch and cause the vehicle to travel straight. Thereafter, the driver will operate a finish point setting switch at a finishing point. With these, there is set the teaching route which connects the start point with the finish point. As a 180 degree turning traveling is effected by a manual operation and next a target setting switch is operated at a location where the next seedling planting work traveling is desired to be initiated, whereby there is set a target traveling route parallel with the teaching route. Then, the driving mode will be switched over to an automated steering for automated traveling along this target traveling route. After this, the seedling planting work traveling by the automated steering along the target traveling route and the 180 degree turning traveling by the manual steering and setting of a new target traveling route will be repeated.

Patent Document 2 discloses a combine as a "harvester" having the automated traveling ability. Upon arrival at a field, the combine will effect a manual work traveling operation called "circumference reaping work traveling" in which harvesting is done while the machine body makes harvesting while making turns along the inner side of the borderline of the field. This circumference reaping work traveling results in creation of an outer circumference area which constitutes a worked (work-completed) area, with an unworked area remaining on the inner side of this outer circumference area. As this unworked area is to be worked by automated traveling, the circumference reaping work traveling will be effected in such a manner that the unworked area may be provided in the form of a square (or a rectangle) for easier computation of the traveling routes for the automated traveling. The traveling routes covering the unworked area is calculated by a traveling route calculation program included in this combine.

### RELATED ART DOCUMENTS

### PATENT DOCUMENTS

Patent Document 1: Japanese Unexamined Patent Application Publication No. 2017-123804
Patent Document 2: International Publication No. 2018/101351.

Documents US 2015/331423 A1 and WO 2018/101351 A1 also disclose harvesters capable of some forms of automated traveling and manual traveling.

### SUMMARY OF THE INVENTION

### PROBLEMS TO BE SOLVED BY INVENTION

The teaching traveling by manual traveling as disclosed in Patent Document 1 is intended to create a "reference line" for subsequent automated traveling. Therefore, this needs to be implemented with accuracy with taking a work scheme contemplated for a particular field of interest into consideration. Thus, the teaching traveling requires good skill and experience. In the case of calculation of a traveling route covering an unworked area, as disclosed in Patent Document 2, in the case of a large field, the time needed for such calculation becomes excessive and a wait period until the automated traveling becomes excessive also. Moreover, the calculation of such traveling route which covers the unworked area entirely requires a high performance computer with high speed computation facility.

In view of the above-described state of the art, there remains a need for a harvester that does not require a teaching traveling necessitating good skill and experience and that also allows automated traveling based on a traveling route which can be calculated easily.

### SOLUTION

In accordance with the present invention, there is provided a harvester as defined by claim 1. This harvester is capable of automated traveling and manual traveling, and comprises: an inner side map creating section creating, based on an outer shape of an outer circumference area, inner side map data indicative of a polygonal shape of an unworked area located inside an outer circumference area, the outer circumference area being created in an outer circumference of a field with a circumference reaping work traveling by the manual traveling; an initial reference line calculating section calculating from the inner side map data an initial reference line which lies parallel with one side of the unworked area and which connects two border points between the outer circumference area and the unworked area; a subsequent reference line calculating section calculating a subsequent reference line subsequent to the initial reference line and a further subsequent reference line subsequent to the subsequent reference line; an automated traveling control section executing the automated traveling based on a traveling route and a self-machine position, the traveling route being comprised of the initial reference line and the subsequent reference lines; a manual traveling control section executing, based on a manual operation signal, a turning transition traveling for transition from automated traveling using a traveling route to automated traveling using a subsequent traveling route along which the harvester is to travel subsequent to the traveling route; an automated traveling management section configured to grasp the subsequent traveling route during the turning transition traveling; and a notification section configured to notify a driver in response to grasping of the subsequent traveling route by the automated traveling management section.

With the above-described configuration, an unworked area having a polygonal shape is created as a result of circumference reaping work traveling by manual operation and inner side map data indicative of its shape is created. Then, there is calculated an initial reference line which lies parallel with one side of the unworked area. When a harvesting work is to be effected on the unworked area, traveling along a side of the unworked area is effective. Thus, the initial reference line can be utilized as a substitute for a reference line obtained conventionally by the teaching traveling. If this initial reference line is employed as the initial traveling route for automated traveling, the automated traveling is made possible without any teaching traveling. When the harvester arrives at the outer circumference area and the first automated traveling along the initial reference line is completed, a turning transition traveling is effected manually involving a turning in the outer circumference area in order to be able to enter the subsequent reference line calculated as the subsequent traveling route. Thereafter, with repetition of the turning transition traveling and the automated traveling along the subsequent reference line (subsequent traveling route), harvesting work in the unworked area will be completed. With implementation of such harvesting traveling control scheme as described above, harvesting by the harvester in a field is made possible without any teaching traveling or complicated traveling route calculation.

In the outer circumference area, turning transition traveling by manual steering is effected. In the unworked area located on the inner side of the outer circumference area, automated traveling along the traveling route is effected. In case the driver fails to take timely notice of entrance of the harvester from the unworked area into the outer circumference area, this will result in the harvester continuing its advance by straight traveling to approach the field borderline (where a levee or the like is present) inadvertently. Then, for automatic detection of such abnormal nearing of the harvester to the field borderline, according to one preferred embodiment of the present invention, the harvester further comprises: an outer side map creating section creating an outer side map indicative of an outer contour of the outer circumference area; and a border-crossing determination section determining possibility of the machine body's border-crossing a field borderline, based on the outer side map and the self-machine position. With the above, upon detection of abnormal approaching of the harvester to the field borderline, an alarm may be issued or a brake may be actuated.

As examples of traveling pattern for work traveling in an unworked area located inside the outer circumference area, there are known a reciprocate shuttle traveling pattern involving traveling to join a plurality of parallel traveling routes via U-turns and a swirling traveling pattern involving traveling in the form of swirl toward the inner side from the outer edge of the unworked area. In case the reciprocate shuttle traveling pattern is applied to the present invention, as the traveling route, there will be calculated a straight line that is parallel with one side of the unworked area and spaced therefrom by a working width. Therefore, in the harvester applying the reciprocate shuttle traveling pattern to the automated traveling, preferably, the subsequent reference line calculating section calculates the subsequent reference line and the further subsequent reference line parallel therewith one after another and the turning transition traveling comprises a U-turn traveling. Whereas, in the harvester applying the swirling traveling pattern to the automated traveling, preferably, the subsequent reference line calculating section calculates the subsequent reference line and the further subsequent reference line one after another in such a manner as to create a traveling trajectory parallel with each side of the polygonal shape representing the outer contour of the unworked area, and the turning transition traveling comprises a special turning realizing a machine body turning for an angle formed by adjacent sides of the polygonal shape.

A harvesting work in a field by the harvester is carried out by repetition of the automated traveling based on the self (self-vehicle) position and the traveling route and the manual turning transition traveling. In this regard, in principle, if a manual operation relating to traveling occurs in the course of the automated traveling, priority will be given to this manual operation. Therefore, even if switchover from the manual traveling to the automated traveling is effected automatically, the traveling mode will return to the manual traveling if the driver unaware of this effects a steering operation. To avoid this problem, advantageously, the timing of switchover from the manual traveling to the automated traveling is determined based on driver's intension. Therefore, there is provided an automated traveling operational tool outputting an automated traveling transition request through a manual operation, and an automated traveling start command is given to the automated traveling control section in response to the automated traveling transition request, if an azimuth divergence between the azimuth of the traveling route used for the automated traveling and the azimuth of the machine body is equal to or less than a predetermined value.

### BRIEF DESCRIPTION OF THE DRAWINGS

Fig. 1 is a side view showing a standard type combine as an example of a harvester,
Fig. 2 is an explanatory view showing circumference reaping work traveling of the combine,
Fig. 3 is an explanatory view showing a traveling pattern involving repetition of reciprocate shuttle traveling connected via U-turning,
Fig. 4 is an explanatory view showing a traveling pattern involving swirling traveling toward the center,
Fig. 5 is an explanatory view for explaining calculation of a reference line by a reciprocate shuttle traveling pattern using switchbacks,
Fig. 6 is an explanatory view for explaining calculation of a reference line for a reciprocate shuttle traveling pattern using normal U-turns,
Fig. 7 is an explanatory view for explaining calculation of a reference line for a swirling traveling pattern,
Fig. 8 is a functional block diagram showing a configuration of a control system of the combine, and
Fig. 9 is a flowchart showing a control flow for a harvesting work traveling in a field.

### EMBODIMENTS

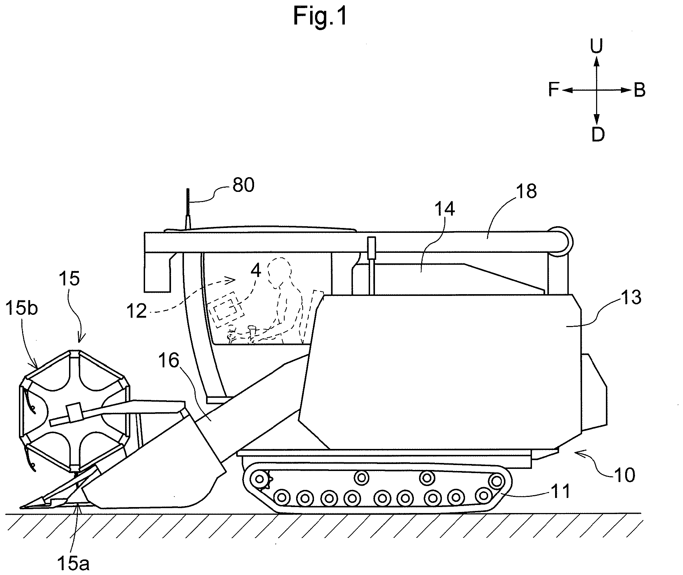

Next, explanation will be made, with taking a standard type combine as an example of a "harvester" capable of automated driving and manual driving. Incidentally, in this detailed disclosure unless indicated explicitly otherwise, the term "front" (direction of arrow F shown in Fig. 1) means the front or forward side with respect to the machine body front/rear direction (traveling direction) and the term "rear" (direction of arrow B shown in Fig. 1) means the rear (back) or reverse side with respect to the machine body front/rear direction (traveling direction). Also, the left/right direction or lateral direction means the machine body transverse direction (machine body width direction) orthogonal to the machine body front/rear direction. Further, the term "upper" (direction of arrow U shown in Fig. 1) and the term "lower" (direction of arrow D shown in Fig. 1) represent the positional relations with respect to the perpendicular direction (vertical direction) of a machine body 10, indicative of the relations concerning the ground clearance.

As shown in Fig. 1, this combine includes the machine body 10, a crawler type traveling device 11, a driving section 12, a threshing device 13, a grain tank 14, a harvesting section 15, a conveyer device 16, a grain discharging device 18, and a self-machine position detection module 80.

The traveling device 11 is provided under the machine body 10. The combine is configured to be capable of self-propelling by means of the traveling device 11. The driving section 12, the threshing device 13 and the grain tank 14 are provided upwardly of the traveling device 11 and together constitute an upper part of the machine body 10. In the driving section 12, a driver driving the combine and a monitoring person monitoring a work by the combine can ride. Incidentally, the monitoring person may optionally monitor such combine work from the outside of the combine machine body.

The grain discharging device 18 is provided upwardly of the grain tank 14. Further, the self-machine position detection module 80 is attached to an upper face of the driving section 12.

The harvesting section 15 is provided at a front portion of the combine. And, the conveyer device 16 is provided rearwardly of the harvesting section 15. The harvesting section 15 includes a reaping mechanism 15a and a reel 15b. The reaping mechanism 15a reaps planted grain stalks. And, the reel 15b while being rotatably driven rakes in the planted stain stalks as the harvesting subject. With the above-described arrangement, the harvesting section 15 harvests agricultural produces (an example of farm produces) of the field. And, the combine is capable of a work traveling with the traveling device 11 while harvesting the grains in the field by the harvesting section 15.

The reaped grain stalks reaped by the reaping mechanism 15a are conveyed by the conveyer device 16 to the threshing device 13. In this threshing device 13, the reaped grain stalks are subjected to a threshing treatment. The grains obtained by this threshing treatment are stored in the grain tanks 14. The grains stored in the grain tank 14 will be discharged, when needed, by the grain discharging device 18 to the outside of the machine.

Further, in the driving section 12, there is disposed a general-purpose terminal 4. In the instant embodiment, this general-purpose terminal 4 is secured to the driving section 12. However, the invention is not limited to this arrangement. Alternatively, the general-purpose terminal 4 may be detachably attached to the driving section 12 or may be disposed outside the combine machine body.

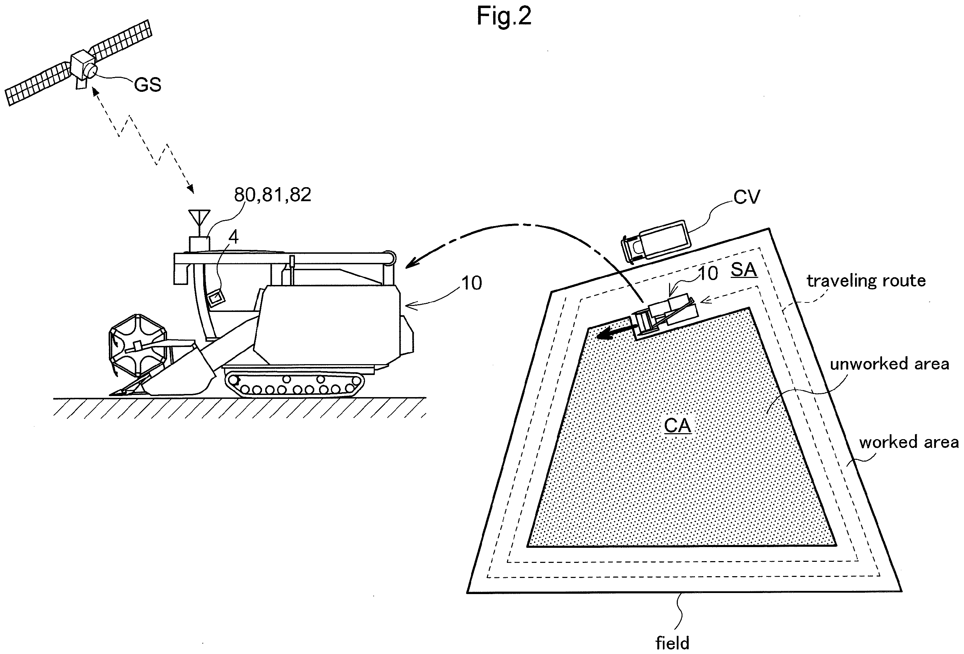

As shown in Fig. 2, this combine travels automatically along a traveling route set in the field. To this end, information of its self-machine position is needed. The self-machine position detection module 80 includes a GPS (global positioning system) unit 18 and an INS (inertial navigation system) unit 82. The GPS unit 81 receives GNSS (global navigation satellite system) signals (including GPS signals) which are position information transmitted from an artificial satellite GS and outputs positioning data for calculating a self-machine position. The INS unit 82 incorporates a gyro acceleration sensor and a magnetic azimuth sensor and outputs position vector indicative of an instantaneous traveling direction. The INS unit 82 is used for supplementing the self-machine position calculation by the GPS unit 81. The INS unit 82 may be disposed at a location separate from the GPS unit 81.

A procedure of carrying out a harvesting work in a field by this combine is as follows.

Firstly, a driving/monitoring person will manually operate the combine and carry out a harvesting work while effecting a circumference reaping work traveling along a borderline of a field in an outer circumferential portion inside the field as shown in Fig. 2. An area formed as a reaping-completed area ("worked area") by the circumference reaping traveling will be set as an outer circumference area SA. And, the inner area left as an un-reaped land ("unworked area") on the inner side of the outer circumference area SA will be set as an "unworked area" CA. In this embodiment, the circumference reaping work traveling is effected in such a manner to create a square or rectangular-shaped unworked area CA. Needless to say, a triangular or a pentagonal unworked area CA may be employed also.

Further, in the above, in order to secure a certain amount of width for the outer circumference area SA, the driver will cause the combine to travel for 3 to 4 laps. In this traveling, with completion of one lap traveling of the combine, the width of the outer circumference area SA is increased by the working width of the combine. After completion of first two or three laps of traveling, the width of the outer circumference area SA will become about 2 to 2 times the working width of the combine. Incidentally, the circumference reaping work traveling is not limited to 3 to 4 laps of traveling, but may be 1 lap, 2 laps or 5 or more laps.

The outer circumference area SA is used as a space allowing the combine to make a turn during harvesting traveling in the unworked area CA. Further, the outer circumference area SA is used also as a space allowing certain movements, such as a movement to a location for discharging grains or a movement to a location of fuel replenishment, after temporary completion of harvesting traveling.

Incidentally, a transporter vehicle CV shown in Fig. 2 can collect and transport the grains discharged from the grain discharging device 18 of the combine. At the time of grain discharging, the combine will move to the vicinity of the transporter vehicle CV and then discharge the grains to the transporter vehicle CV by the grain discharging device 18.

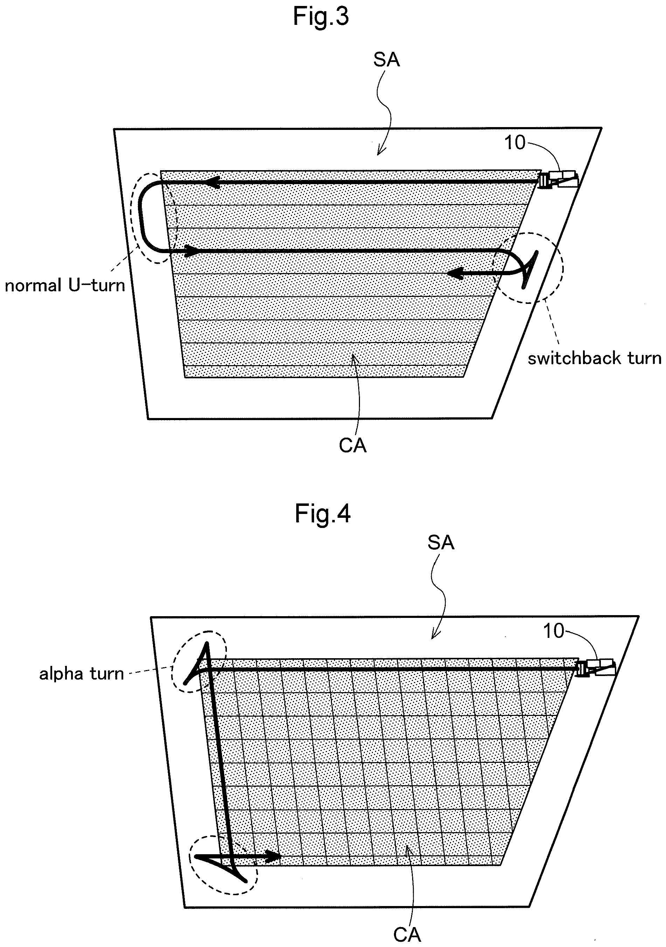

After creation of inner side map indicative of the shape or contour of the unworked area CA, the planted grain stalks in the unworked area CA will be reaped in association with an automated traveling along a linear or straight traveling route calculated based on this inner side map data and a manually effected turning transition traveling for transition from one traveling route to a traveling route subsequent thereto. Traveling patterns used in the above include a reciprocate shuttle traveling pattern (shown in Fig. 3) involving traveling along to connect a plurality of parallel traveling routes via U-turns and a swirling traveling pattern (shown in Fig. 4) involving traveling in a swirling form along the outer edge of the unworked area CA.

In the reciprocate shuttle traveling pattern shown in Fig. 3, the combine will travel along the traveling routes parallel with one side of the unworked area CA while connecting these routes to each other via U-turns. Such U-turn traveling includes a normal U-turn striding over one or more traveling routes and a switchback pattern connecting adjacent traveling routes. More particularly, the normal U-turn comprises a 180-degree turn involving two forward 90-degree turns plus a straight traveling or optionally without any straight traveling. The switchback turn comprises a 180-degree turn using a forward 90-degree turn plus reverse and forward 90-degree turns.

In the swirling traveling pattern shown in Fig. 4, the combine will effect orbit traveling in a swirling form toward the center along traveling routes similar to the outer shape of the unworked area CA. For the turn at each corner in the respective traveling lap, there is employed a turning called an alpha turn using a forward run, a reverse turn and a forward turn. Incidentally, in the midst of an ongoing work, change may be made from the swirling traveling pattern to the reciprocate shuttle traveling pattern or from the reciprocate shuttle traveling pattern to the swirling traveling pattern.

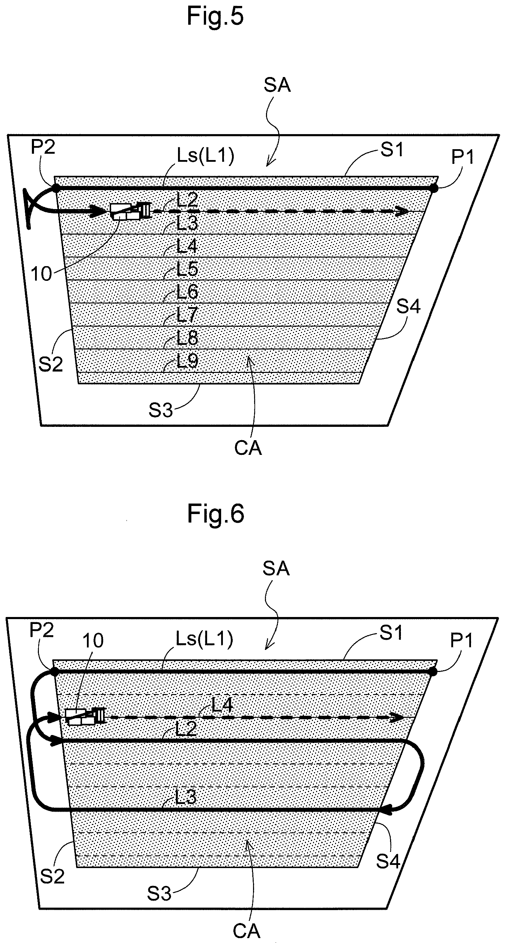

When the reciprocate shuttle traveling pattern is selected, the traveling routes for use in the automated traveling will be calculated as follows, based on the inner side map data. As shown in Fig.5 and Fig. 6, from the inner side data, there is defined an unworked area CA in the shape of a square or rectangle consisting of a first side S1, a second side S2, a third side S3 and a fourth side S4. And, the first side S1 which constitutes the long side of this unworked area CA will be selected as a reference side S1. Then, a line which lies parallel with this reference side S1 and which also passes the inner side from the reference side S1 by a half of a working width (reaping width) will be calculated as a reference line L1. This reference line L1 constitutes an initial reference line Ls which is the first traveling route for the automated traveling. The initial reference line Ls connects two border points P1 and P2 between the outer circumference area SA and the unworked area CA.

In case the combine effects a switchback turn which requires a smaller space for making a 180-degree turn. As shown in Fig. 5, a subsequent reference line and a further subsequent reference line subsequent one after another in continuation from the initial reference line Ls via U-turns (turning transition traveling) are a group of straight lines L2, L3,....calculated in parallel with and spaced therefrom by the working width from the initial reference line Ls.

Whereas, in case the combine effects a normal U-turn which requires a greater space for making a 180-degree turn than the switchback turn described above, a subsequent reference line subsequent to the initial reference line Ls via a U-turn (turning transition traveling) is a straight line (denoted with L2 in Fig. 6) calculated in parallel with and spaced therefrom by a plurality of times (three times in Fig. 6) of the working width. By a similar method, a further subsequent reference line (denoted with L3 in Fig. 6) will be calculated also. In this way, with taking into consideration the space needed for the normal U-turns, the subsequent reference lines will be calculated and the harvesting work will be conducted in the unworked area CA accordingly. Incidentally, although the unworked area CA has a rectangular (or square) shape in Figs. 5 and 6, even when the area has other shape such as a triangular shape, a pentagonal shape, etc., the traveling routes can be calculated one after another by a similar method, once the reference side S1 is selected.

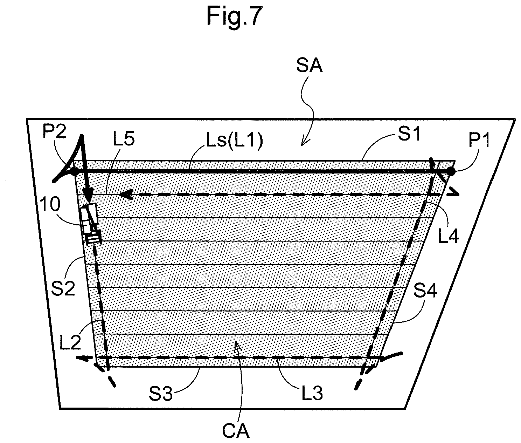

When the swirling traveling pattern is selected, the traveling route for use in the automated traveling will be similar to those of the reciprocate shuttle traveling pattens and will be calculated as follows, based on the inner side map data. As shown in Fig. 7, the first side S1 which is the long side (this may be the short side in the case of the swirling traveling pattern) of the unworked area CA will be selected as the reference side S1. Then, a line which lies parallel with this reference side S1 and passes the inner side from the reference side S1 inner by a half of the working width (reaping width) will be calculated as a reference line L1. This reference line L1 constitutes an initial reference line Ls which is the first traveling route of the automated traveling. The initial reference line Ls connects two border points P1 and P2 between the outer circumference area SA and the unworked area CA. Further, a line which is parallel with the second side S2 adjacent the reference side S1 in the advancing direction of the combine and passes the inner side from the second side S2 inner by the half of the working width (reaping width) will be calculated as a subsequent reference line L2 and this will become a subsequent traveling route as the target of the automated traveling subsequent to the first traveling route. The first traveling route and the subsequent traveling route will be connected to each other via an alpha turn ("special turn") which realizes a machine body turn by the angle formed by the reference side S1 and the second side S2. Similarly, a further subsequent reference line L3 will be calculated serially.

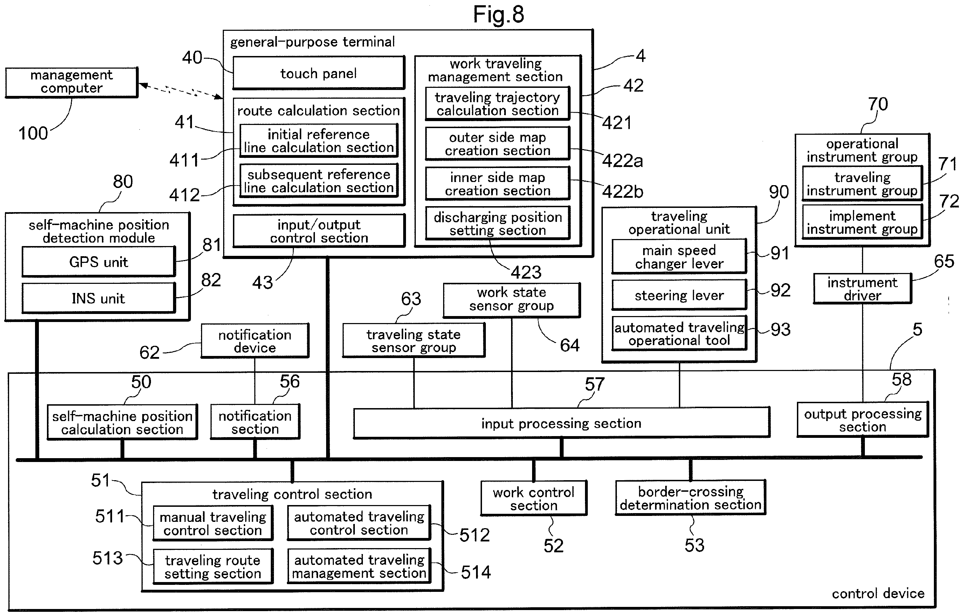

Fig. 8 shows a control system of the combine. This combine control system is comprised of a control device 5 constituted of many electronic control units called ECU interconnected via a vehicle-mounted LAN and various kinds of input/output devices for effecting signal communication and data communication with the control device 5.

The control device 5 includes an output processing section 58 and an input processing section 57 as input/output interfaces. The output processing section 58 is connected to various operational instruments 70 via an instrument driver 65. The operational instruments 70 include a traveling instrument group 71 relating to traveling and an implement instrument group 72 relating to implements. The traveling instrument group 71 includes e.g. engine instruments, speed changer instruments, control instruments, navigation instruments, etc. The implement instrument group 72 includes e.g. control instruments included in the harvesting section 15, the threshing device 13, the conveyer device 16, and the grain discharging device 18.

To the input processing section 57, there are connected e.g. a traveling state sensor group 63, an implement state sensor group 64, a traveling operational unit 90, etc. The traveling state sensor group 63 includes a vehicle speed sensor, an engine rotational speed sensor, a parking brake detection sensor, a speed position detection sensor, a steering position detection sensor, etc. The implement state sensor group 64 includes sensors for detecting a driving state, a posture, etc. of the harvesting implements (harvesting section 15, threshing device 13, conveyer device 16, grain discharging device 18) as well as sensors for detecting states of grain stalks and grains, etc.

The traveling operational unit 90 is a generic reference to various operational tools which are manually operated by the driver and whose operational signals are inputted to the control device 5. The traveling operational unit 90 includes speed changer operational tools such as a main speed changer lever 91, steering operational tools such as a steering lever 92, an automated traveling operational tool 93, etc. The automated traveling operational tool 93 outputs an automated traveling transition request via a driver's operation.

A notification device 62 is a device for providing alarms to a driver or the like relating to a work state and a traveling state and constituted of a buzzer, a lamp, etc. Incidentally, the general-purpose terminal 4 too functions, through displaying on the touch panel 40, as a device for notifying the driver or the like of a work state, a traveling state or various kinds of information.

This control device 5 is connected also to the general-purpose terminal 4 via the vehicle-mounted LAN. As shown in Fig. 8, the general-purpose terminal 4 comprises a tablet computer having a touch panel 40. The general-purpose terminal 4 includes a route calculation section 41, a work traveling management section 42 and an input/output control section 43. The input/output control section 43 has a function of constituting a graphic interface using the touch panel 40 and also a function of data exchange with a remotely located management computer 100 via a wireless network, the internet, etc.

The work traveling management section 42 includes a traveling trajectory calculation section 421, an outer side map creation section 422a, an inner side map creation section 422b and a discharging position setting section 423. The traveling trajectory calculation section 421 calculates a traveling trajectory based on self-machine positions given from the control device 5. The outer side map creation section 422a, as shown in Fig. 2, creates outer side map data indicative of the outer contour of the outer circumference area SA formed in the outer circumferential portion of the field when the combine effects the circumference reaping traveling by a manual operation. The outermost line of the outer circumference area SA will become the borderline relative to a levee of the field and the innermost line of the outer circumference area SA will become the outer shape of the unworked area CA. The inner side map creation section 422b creates, based on the shape of the outer circumference area SA, inner side map data indicative of the polygonal shape of the unworked area CA which is the area inside the outer circumference area SA. This unworked area CA becomes a work target area where work traveling involving the automated traveling is now to be carried out.

The discharging position setting section 423 sets a vehicle stop position of the combine when grains in the grain tank 14 stored therein to full are to be discharged to the transporter vehicle CV by the grain discharging device 18.

The route calculation section 41 calculates a traveling route for the automated traveling for the unworked area CA determined by the inner side map creation section 422b. Incidentally, a traveling pattern (the reciprocate shuttle traveling pattern or the swirling traveling pattern) for the automated traveling in the unworked area CA will be inputted in advance via the touch panel 40. A route calculation of a selected route pattern will be effected automatically in response to a driver's input of completion of manual traveling in the outer circumference area SA.

The route calculation section 41 includes an initial reference line calculation section 411 and a subsequent reference line calculation section 412. The initial reference line calculation section 411 calculates, as a "reference side", one side of the unworked area CA based on the inner side map data. The initial reference line calculation section 411 sets, as an "initial reference line Ls", a segment which lies parallel with the reference side and extends with a spacing corresponding to a half of the working width from the reference side to join border points between the outer circumference area SA and the unworked area CA. Incidentally, regarding the reference side, if the unworked area CA has a square or rectangular shape, each one of the four sides thereof can be a candidate for the reference side. In fact, a side which will allow smooth traveling from an automated traveling starting point will be chosen. The automated traveling starting point may be set by the driver or may alternatively be set by the route calculation section 41 based on a current self-machine position or past traveling result of the combine.

The subsequent reference line calculation section 412, as explained hereinbefore with reference to Figs. 5 to 7, calculates serially subsequent reference lines such as a subsequent reference line L2 subsequent to the initial reference line Ls, a further subsequent reference line L3 subsequent to the subsequent reference line L2, and so on.

The control device 5 includes a self-machine position calculation section 50, a traveling control section 51, a work control section 52 and a border-crossing determination section 53. The self-machine position calculation section 50 calculates a self-machine position in the form of map coordinates (or field coordinates), based on positioning data transmitted sequentially from the GPS unit 81. Alternatively, the self-machine position calculation section 50 can calculate a self-machine position by using position vectors and traveling distances from the INS (inertial navigation system) unit 82. Further alternatively, the self-machine position calculation section 50 can calculate a self-machine position by combining the signals from the GPS unit 81 and the INS unit 82.

A notification section 56 creates notification data based on e.g. commands or the like from the various functional sections of the control device 5 and provides the data to the notification device 62.

The traveling control section 51 has an engine control function, a steering control function, a vehicle speed control function, and so on and provides traveling control signals to the traveling instrument group 71. The work control section 52 provides work control signals to the implement instrument group 72 in order to control movements of the implements (harvesting section 15, threshing device 13, conveyer device 16, grain discharging device 18, etc.)

This combine is capable of traveling in both the automated driving for carrying out a harvesting work by the automated traveling and the manual driving for carrying out a harvesting work by the manual traveling. To this end, the traveling control section 51 includes a manual traveling control section 511, an automated traveling control section 512, a traveling route setting section 513 and an automated traveling management section 514.

In an automated traveling mode, the automated traveling control section 512 generates control signals for vehicle speed changes including the automatic steering and stop to control the traveling instrument group 71. The control signals relating to the automatic steering will be produced in such a manner to resolve a divergence if any between the traveling route as the target set by the traveling route setting section 513 and a self-machine position calculated by the self-machine position calculation section 50 as well as a divergence if any between the azimuth of the traveling route and the azimuth of the machine body. The control signals relating to vehicle speed changes will be generated based on preset vehicle speed values.

In a manual traveling mode, the manual traveling control section 511 generates control signals based on manual operation signals outputted in response to driver's operations to control the traveling instrument group 71. With this, the manual driving is realized. Incidentally, the traveling route calculated by the route calculation section 41 can be utilized as a guidance for traveling of the combine along this traveling route, even in the manual driving.

The automated traveling management section 514 determines permissivity or non-permissivity of the automated traveling based on a preset automated traveling permission condition. If the result of the determination is permissivity, then, an automated traveling start command is given to the automated traveling control section 512.

The combine effects the automated traveling along a straight traveling route by way of controlling by the automated traveling control section 512. Further, a turning transition traveling which is effected at the time of transition from a foregoing automated traveling to a subsequent automated traveling is a manual traveling and its control is effected by the controlling by the manual traveling control section 511. In the case of transition to be made from the automated traveling to the manual turning transition traveling, the harvesting section 15 will be elevated and the steering lever 92 will be pivotally operated. Therefore, the automated traveling will be stopped as being triggered by this operation and the traveling mode will be transitioned to the manual traveling. Further, a traveling route set by the traveling route setting section 513 for subsequent automated traveling will be grasped by the automated traveling management section 514 and on a provision of calculations of an azimuth divergence and a positional divergence between this traveling route and the self-machine position being possible in advance, the contemplated transition from the manual turning transition traveling to the automated traveling will be executed.

The border-crossing determination section 53 determines possibility of the machine body 10 border-crossing the borderline, based on a field borderline (e.g. a levee) obtained via the outer side map data and the self-machine position. For instance, in case the distance to the field borderline in the advancing direction of the machine body 10 is 2 meters, the border-crossing determination section 53 will determine border-crossing of the field borderline being possible and issue an alarm via the notification device 62. Further, when the distance to the field borderline becomes 1 meter, speed reduction or stop of traveling of the machine body 10 will be effected.

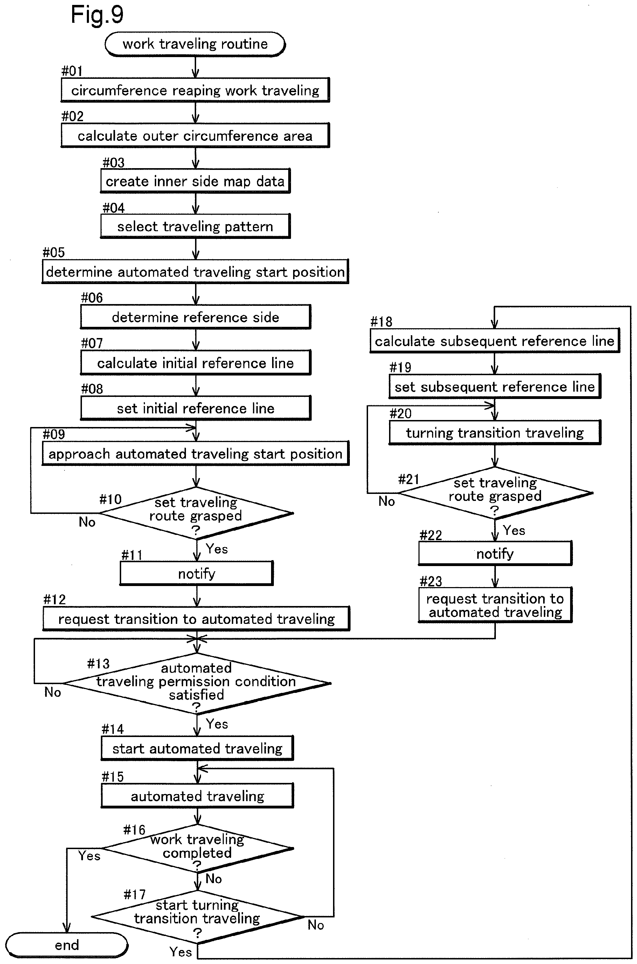

Next, with reference to Fig. 9, there will be explained one example of work traveling of this combine in a field which combines the manual traveling and the automated traveling.

Firstly, the circumference reaping traveling is carried out manually to set the unworked area CA in a square or rectangular shape (#01). Upon completion of this circumference reaping traveling, the outer circumference area SA is calculated (#02). Then, as the innermost line of this outer circumference area SA delimits the outer shape (contour) of the unworked area CA, based on the calculated outer circumference area SA, the inner side map data indicative of the shape of the unworked area CA is created (#03). The process then selects a traveling pattern contemplated for use a harvesting work by the automated traveling in this unworked area CA (#04). Here, if the reciprocate shuttle traveling pattern is selected, the process will determine the automated traveling starting position with taking e.g. the current self-machine position into consideration (#05). Upon determination of the automated traveling starting position, the initial reference line calculation section 411 determines one side as the reference side among the respective sides of the square (rectangular) delimiting the unworked area CA, which one side has a direction suitable for the contemplated automated traveling from this automated traveling starting position (#06) and further calculates a line obtained by offsetting this reference side to the inner side by an amount of 1/2 of the working width (including overlap if any) as an initial reference line Ls (#07). This initial reference line Ls will be set by the traveling route setting section 513 as the first traveling route for the automated traveling (#08).

Then, the combine will travel by manual traveling to the automated traveling starting position (#09). As a precondition for execution of the automated traveling, in a program for obtaining the traveling route, it is required that the distance between the traveling route set as the target traveling route and the self-machine position be within a range that allows calculation of divergence between this traveling route and the self-machine position, namely, successful obtaining of the traveling route by the automated traveling management section 514 being required. When the combine approaches the automated traveling starting position and a traveling route is grasped (YES branching at #10), readiness for the automated traveling control will be notified (#11). Then, the driver will operate the automated traveling operational tool 93 to output an automated traveling transition request, thus requesting transition to the automated traveling to the automated traveling management section 514 (#12).

Upon receipt of the transition request to the automated traveling from the driver, the automated traveling management section 514 checks whether the automated traveling permission condition is satisfied or not (#13). If the automated traveling permission condition is not satisfied (NO branching at #13), then, e.g. with issuance of notification of no condition satisfaction, the process will wait for satisfaction of this automated traveling permission condition. On the other hand, if the automated traveling permission condition is satisfied (YES branching at #13), an automated traveling start command will be given to the automated traveling control section 512 (#14). The self-machine position calculated by the self-machine position calculation section 50 has been supplemented with a self-vehicle position which is calculated from a self-machine azimuth comprising an integrated value of relative azimuth change angles obtained by the INS unit 82 and a vehicle speed. In the automated traveling by the automated traveling control section 512, from an azimuth divergence between the self-vehicle azimuth and the azimuth of the traveling route and a position divergence between the self-machine position and the traveling route (lateral divergence of the machine body 10), a steering amount will be calculated to allow the machine body 10 to follow the traveling route and based on this steering amount, the traveling device 11 will be driven (#15). Such azimuth divergences and position divergences which are calculated over time can be displayed on the touch panel 40 of the general-purpose terminal 4.

If the currently set traveling route is the last traveling route (YES branching at #16), then, traveling along this traveling route will complete the work traveling, and the work traveling routine using the automated traveling will be ended. On the other hand, if the currently set traveling route is not the last traveling route (NO branching at #16), then it is necessary to move on to the subsequent traveling route via a turning transition traveling. Then, when the machine body 10 enters the outer circumference area SA from the unworked area CA, the turning transition traveling will be started by driver's judgement (YES branching at #17). The subsequent reference line calculation section 412 will calculate a subsequent reference line at a position spaced from the foregoing traveling route at least by an amount corresponding to two traveling routes, in order to allow 180 degree transition turning traveling for starting the next automated traveling to take place in a smooth manner (#18). The subsequent reference line thus calculated will be set as the next (subsequent) traveling route by the traveling route setting section 513 (#19). In the course of ongoing turning transition traveling (#20), the process will check whether the set traveling route has been grasped by the automated traveling management section 514 or not (#21). If the traveling route is grasped (YES branching at #21), then, the process will notify that the automated traveling control using the subsequent traveling route is being made ready (#22). Then, the driver will operate the automated traveling operational tool 93 to request transition to the automated traveling to the automated traveling management section 514 (#23). Thereafter, the process will repeat starting of the automated traveling, the manually effected turning transition traveling, calculation of further subsequent reference line, setting of further traveling route, until completion of the work traveling for this field (#13-#23).

Though not shown in the flowchart of Fig. 9, if the grain tank 14 becomes nearly full in the middle of a harvesting work, instead of the turning transition traveling, a disengaging traveling will be effected to the discharging position where the transporter vehicle CV is stopped. After completion of grain discharging from the grain tank 14, a returning traveling from the discharging position to the subsequent traveling route will be effected. In these disengaging traveling and returning traveling, the automated traveling is also possible at least partially.

### [Other Embodiments]

(1) In the foregoing embodiment, the reference line L1 used as the initial reference line Ls was calculated as a line which passes on the inner side of the reference side S1, one side of the unworked area CA, by an amount corresponding to a half of the working width (reaping width). Instead of this, the reference line L1 used as the initial reference line Ls may be calculated as a line which passes through a position distant from the reference side S1 by an amount equal to or greater than the working width toward the center portion of the unworked area CA. Namely, the initial reference line Ls may be calculated, without being limited to such vicinity of the edge of the unworked area CA.
(2) In the flowchart shown in Fig.9, the flow of control was such that the calculation of the subsequent reference line subsequent to become the traveling route subsequent to the initial traveling route in the automated traveling in the unworked area CA was carried out in the course of the turning transition traveling and the reference line was then calculated in the course of the turning transition traveling. Instead of this, all of the reference lines together with the initial reference line Ls, namely, all the traveling routes covering the unworked area CA entirely may be calculated at the timing of calculation of the shape of the unworked area CA. Further alternatively, the subsequent reference lines (traveling routes) may be calculated in a fixed group unit in the course of an ongoing harvesting work in the unworked area CA.
(3) The respective functional sections shown in Fig.8 are grouped mainly for the purpose of explanation. In reality, each functional section may be integrated with any other functional section. Further, each functional section may be divided into a plurality of functional sections. For instance, the functional sections formed in the general-purpose terminal 4 may be incorporated partially or entirely into the control device 5.
(4) In the foregoing embodiment, the circumference reaping traveling was done by manual traveling. However, in the second and subsequent laps, the circumference reaping traveling may partially, at least in its straight traveling, employ the automated traveling.
(5) In the foregoing embodiment, the inner side map creation section 422b, the initial reference line calculation section 411, the subsequent reference line calculation section 412, the automated traveling control section 512, the manual traveling control section 511, etc. may all be included in the harvester or may be included in the management computer 100.
(6) In the foregoing embodiment, there was explained a harvester capable of the automated traveling and the manual traveling. However, the respective functional sections in the foregoing embodiment may be formed in a harvesting system including the harvester and the management computer 100 or may be configured as a harvesting program. Further alternatively, the processes carried out by the respective functional sections in the foregoing embodiment may be configured as a harvesting method.
(7) Further, such harvesting program may be adapted to be recorded in a recording medium.

### INDUSTRIAL APPLICABILITY

The present invention is applicable not only to the standard type combine, but also to a self-threshing type combine. Moreover, the invention is applicable also to various kinds of harvesting machines such as a corn harvester, a potato harvester, a carrot harvester, a sugar cane harvester, etc.

### DESCRIPTION OF SIGNS

- 10:: machine body
- 41:: route calculation section
- 411:: initial reference line calculation section
- 412:: subsequent reference line calculation section
- 42:: work traveling management section
- 421:: traveling trajectory calculation section
- 422a:: outer side map creation section
- 422b:: inner side map creation section
- 423:: discharging position setting section
- 43:: input control section
- 50:: self-machine position calculation section
- 51:: traveling control section
- 511:: manual traveling control section
- 512:: automated traveling control section
- 513:: traveling route setting section
- 514:: automated traveling management section
- 53:: border-crossing determination section
- 56:: notification section
- 80:: self-machine position detection module
- 81:: GPS unit
- 82:: INS unit
- 90:: traveling operational unit
- 91:: main speed changer lever
- 92:: steering lever
- 93:: automated traveling operational tool
- SA:: outer circumference area
- CA:: unworked area
- Ls:: initial reference line (group of straight lines)
- L2:: subsequent reference line (group of straight lines)
- P1:: border point
- P2:: border point
- S1:: reference side (first side)

## Claims

1. A harvester capable of automated traveling and manual traveling, comprising:
an inner side map creating section (422b) configured to create, based on an outer shape of an outer circumference area (SA), inner side map data indicative of a polygonal shape of an unworked area (CA) located inside the outer circumference area (SA), the outer circumference area (SA) being created in an outer circumference of a field with a circumference reaping work traveling by the manual traveling;
an initial reference line calculating section (411) configured to calculate from the inner side map data an initial reference line (Ls) which lies parallel with one side of the unworked area (CA) and which connects two border points (P1, P2) between the outer circumference area (SA) and the unworked area (CA);
a subsequent reference line calculating section (412) configured to calculate a subsequent reference line (L2) subsequent to the initial reference line (Ls) and a further subsequent reference line (L3) subsequent to the subsequent reference line (L2);
an automated traveling control section (512) configured to execute the automated traveling based on a traveling route and a self-machine position, the traveling route being comprised of the initial reference line (Ls) and the subsequent reference lines (L2, L3); and
a manual traveling control section (511) configured to execute, based on a manual operation signal, a turning transition traveling for transition from automated traveling using one of the reference lines to automated traveling using one of the subsequent reference lines; the harvester being **characterized by** further comprising:
an automated traveling management section (514) configured to grasp one of the subsequent reference lines during the turning transition traveling;
a notification section (56) configured to notify a driver in response to grasping the one the subsequent reference lines by the automated traveling management section (514); and
an automated traveling operation tool (93) configured to output an automated traveling transition request through a manual operation,
wherein if one of the subsequent reference lines is grasped and an azimuth divergence between the azimuth of the one of the subsequent reference lines used for the automated traveling and the azimuth of a machine body (10) is equal to or less than a predetermined value, an automated traveling start command is given to the automated traveling control section (512) in response to the automated traveling transition request outputted from the automated traveling operation tool (93).

2. The harvester of claim 1, further comprising:
an outer side map creating section (422a) configured to create an outer side map indicative of an outer contour of the outer circumference area (SA); and
a border-crossing determination section (53) configured to determine possibility of the machine body's border-crossing a field borderline, based on the outer side map data and the self-machine position.

3. The harvester of claim 1 or 2, wherein the subsequent reference line calculating section (412) is configured to calculate the subsequent reference line (L2) parallel with the initial reference line (Ls) and the further subsequent reference line (L3) parallel with the subsequent reference line (L2) one after another and the turning transition traveling comprises a U-turn traveling.

4. The harvester of claim 1 or 2, wherein:
the subsequent reference line calculating section (412) is configured to calculate the subsequent reference line (L2) and the further subsequent reference line (L3) one after another in such a manner as to create a traveling trajectory parallel with each side of the polygonal shape representing the outer contour of the unworked area (CA); and
the turning transition traveling comprises a special turning realizing a machine body turning for an angle formed by adjacent sides of the polygonal shape.

5. A harvesting program using a harvester capable of automated traveling and manual traveling, the program causing a computer to execute:
an inner side map creating function creating, based on an outer shape of an outer circumference area (SA), inner side map data indicative of a polygonal shape of an unworked area (CA) located inside the outer circumference area (SA), the outer circumference area (SA) being created in an outer circumference of a field with a circumference reaping work traveling by the manual traveling;
an initial reference line calculating function calculating from the inner side map data an initial reference line (Ls) which lies parallel with one side of the unworked area (CA) and which connects two border points (P1, P2) between the outer circumference area (SA) and the unworked area (CA);
a subsequent reference line calculating function calculating a subsequent reference line (L2) subsequent to the initial reference line (Ls) and a further subsequent reference line (L3) subsequent to the subsequent reference line (L2);
an automated traveling control function executing the automated traveling based on a traveling route and a self-machine position, the traveling route being comprised of the initial reference line (Ls) and the subsequent reference lines (L2, L3); and
a manual traveling control function executing, based on a manual operation signal, a turning transition traveling for transition from automated traveling using one of the reference lines to automated traveling using one of the subsequent reference lines along which the harvester is to travel subsequent to the traveling route; the harvesting program being **characterized by** further causing a computer to execute:
a grasp function grasping one of the subsequent reference lines during the turning transition traveling;
a notification function notifying a driver in response to grasping the one of the subsequent reference lines by the grasp function;
an automated traveling operation function outputting an automated traveling transition request through a manual operation; and
a function of giving an automated traveling start command to the automated traveling control function in response to the automated traveling transition request outputted from the automated traveling operation function, if the the one of the subsequent reference lines is grasped and an azimuth divergence between the azimuth of the one of the subsequent reference lines used for the automated traveling and the azimuth of a machine body (10) is equal to or less than a predetermined value.

6. The harvesting program of claim 5, further comprising:
an outer side map creating function creating an outer side map indicative of an outer contour of the outer circumference area (SA); and
a border-crossing determination function determining possibility of the machine body's border-crossing a field borderline, based on the outer side map and the self-machine position.

7. The harvesting program of claim 5 or 6, wherein the subsequent reference line calculating function calculates the subsequent reference line (L2) parallel with the initial reference line (Ls) and the further subsequent reference line (L3) parallel with the subsequent reference line (L2) one after another and the turning transition traveling comprises a U-turn traveling.

8. The harvesting program of claim 5 or 6, wherein:
the subsequent reference line calculating function calculates the subsequent reference line (L2) and the further subsequent reference line (L3) one after another in such a manner as to create a traveling trajectory parallel with each side of the polygonal shape representing the outer contour of the unworked area (CA); and
the turning transition traveling comprises a special turning realizing a machine body turning for an angle formed by adjacent sides of the polygonal shape.

9. A computer-readable recording medium recording the harvesting program of any one of claims 5 to 8.

## Patentansprüche

1. Erntemaschine, die in der Lage ist, automatisch zu fahren und manuell zu fahren, umfassend:
eine Kartenerstellungssektion (422b) für die Innenseite, die dazu ausgestaltet ist, basierend auf einer Außenform eines Außenumfangsbereiches (SA) Kartendaten der Innenseite zu erstellen, die für eine polygonale Form eines unbearbeiteten Bereiches (CA) bezeichnend sind, der sich innerhalb des Außenumfangsbereiches (SA) befindet, wobei der Außenumfangsbereich (SA) in einem Außenumfang eines Feldes mit einer Umfangs-Erntearbeitsfahrt durch das manuelle Fahren erstellt wird,
eine Berechnungssektion (411) für Anfangsreferenzlinien, die dazu ausgestaltet ist, aus den Kartendaten der Innenseite eine Anfangsreferenzlinie (Ls) zu berechnen, die parallel zu einer Seite des unbearbeiteten Bereiches (CA) liegt und die zwei Grenzpunkte (P1, P2) zwischen dem Außenumfangsbereich (SA) und dem unbearbeiteten Bereich (CA) verbindet,
eine Berechnungssektion (412) für Folgereferenzlinien, die dazu ausgestaltet ist, eine Folgereferenzlinie (L2) folgend auf die Anfangsreferenzlinie (Ls) und eine weitere Folgereferenzlinie (L3) folgend auf die Folgereferenzlinie (L2) zu berechnen,
eine Steuersektion (512) für automatisches Fahren, die dazu ausgestaltet ist, das automatische Fahren basierend auf einer Fahrroute und einer von der Maschine bestimmten Position auszuführen, wobei die Fahrroute aus der Anfangsreferenzlinie (Ls) und den Folgereferenzlinien (L2, L3) besteht, und
eine Steuersektion (511) für manuelles Fahren, die dazu ausgestaltet ist, basierend auf einem Signal für manuellen Betrieb ein Übergangsfahren zum Wenden für den Übergang von dem automatischen Fahren unter Verwendung einer der Referenzlinien in automatisches Fahren unter Verwendung einer der Folgereferenzlinien auszuführen,
wobei die Erntemaschine gekennzeichnet ist, dass sie ferner umfasst:
eine Verwaltungssektion (514) für automatisches Fahren, die dazu ausgestaltet ist, eine der Folgereferenzlinien während des Übergangsfahrens zum Wenden zu ergreifen,
eine Benachrichtigungssektion (56), die dazu ausgestaltet ist, einen Fahrer als Reaktion auf das Ergreifen der einen der Folgereferenzlinien durch die Verwaltungssektion (514) für automatisches Fahren zu benachrichtigen, und
ein Betriebswerkzeug (93) für automatisches Fahren, das dazu ausgestaltet ist, eine Anfrage auf Übergang für automatisches Fahren durch einen manuellen Betrieb auszugeben,
wobei, wenn eine der Folgereferenzlinien ergriffen wird und eine Azimutabweichung zwischen dem Azimut von der einen der Folgereferenzlinien, die zum automatischen Fahren verwendet werden, und dem Azimut eines Maschinenkörpers (10) gleich oder weniger als ein vorbestimmter Wert ist, ein Startbefehl für automatisches Fahren an die Steuersektion (512) für automatisches Fahren als Reaktion auf die Anfrage auf Übergang für automatisches Fahren gegeben wird, die von dem Betriebswerkzeug (93) für automatisches Fahren ausgegeben wird.

2. Erntemaschine nach Anspruch 1, ferner umfassend:
eine Kartenerstellungssektion (422a) für die Außenseite, die dazu ausgestaltet ist, eine Karte für die Außenseite zu erstellen, die für eine Außenkontur des Außenumfangsbereiches (SA) bezeichnend ist, und
eine Grenzüberschreitungs-Bestimmungssektion (53), die dazu ausgestaltet ist, die Möglichkeit, dass der Maschinenkörper eine Grenzüberschreitung einer Feldgrenzlinie durchführt, basierend auf den Kartendaten für die Außenseite und der von der Maschine bestimmten Position zu ermitteln.

3. Erntemaschine nach Anspruch 1 oder 2, wobei die Berechnungssektion (412) für Folgereferenzlinien dazu ausgestaltet ist, die Folgereferenzlinie (L2) parallel zu der Anfangsreferenzlinie (Ls) und die weitere Folgereferenzlinie (L3) parallel zu der Folgereferenzlinie (L2) nacheinander zu berechnen, und das Übergangsfahren zum Wenden ein Kehrtwendefahren umfasst.

4. Erntemaschine nach Anspruch 1 oder 2, wobei:
die Berechnungssektion (412) für Folgereferenzlinien dazu ausgestaltet ist, die Folgereferenzlinie (L2) und die weitere Folgereferenzlinie (L3) nacheinander derart zu berechnen, dass eine Fahrtrajektorie parallel zu jeder Seite der polygonalen Form erstellt wird, die die Außenkontur des unbearbeiteten Bereichs (CA) darstellt, und
das Übergangsfahren zum Wenden ein besonderes Wenden umfasst, das ein Maschinenkörperwenden für einen Winkel durchführt, der von angrenzenden Seiten der polygonalen Form gebildet wird.

5. Ernteprogramm, das eine Erntemaschine verwendet, die in der Lage ist, automatisch zu fahren und manuell zu fahren, wobei das Programm bewirkt, dass ein Computer ausführt:
eine Kartenerstellungsfunktion für die Innenseite, die basierend auf einer Außenform eines Außenumfangsbereiches (SA) Kartendaten der Innenseite erstellt, die für eine polygonale Form eines unbearbeiteten Bereiches (CA) bezeichnend sind, der sich innerhalb des Außenumfangsbereiches (SA) befindet, wobei der Außenumfangsbereich (SA) in einem Außenumfang eines Feldes mit einer Umfangs-Erntearbeitsfahrt durch das manuelle Fahren erstellt wird,
eine Berechnungsfunktion für Anfangsreferenzlinien, die aus den Kartendaten der Innenseite eine Anfangsreferenzlinie (Ls) berechnet, die parallel zu einer Seite des unbearbeiteten Bereiches (CA) liegt und die zwei Grenzpunkte (P1, P2) zwischen dem Außenumfangsbereich (SA) und dem unbearbeiteten Bereich (CA) verbindet,
eine Berechnungsfunktion für Folgereferenzlinien, die eine Folgereferenzlinie (L2) folgend auf die Anfangsreferenzlinie (Ls) und eine weitere Folgereferenzlinie (L3) folgend auf die Folgereferenzlinie (L2) berechnet,
eine Steuerfunktion für automatisches Fahren, die das automatische Fahren basierend auf einer Fahrroute und einer von der Maschine bestimmten Position ausführt, wobei die Fahrroute aus der Anfangsreferenzlinie (Ls) und den Folgereferenzlinien (L2, L3) besteht, und
eine Steuerfunktion für manuelles Fahren, die basierend auf einem Signal für manuellen Betrieb ein Übergangsfahren zum Wenden für den Übergang von dem automatischen Fahren unter Verwendung einer der Referenzlinien zu dem automatischen Fahren unter Verwendung einer der Folgereferenzlinien, entlang welchen die Erntemaschine folgend auf die Fahrroute fahren soll, ausführt,
wobei das Ernteprogramm **gekennzeichnet ist durch** weiteres Bewirken, dass ein Computer ausführt:
eine Ergreifungsfunktion, die eine der Folgereferenzlinien während des Übergangsfahrens zum Wenden ergreift,
eine Benachrichtigungsfunktion, die einen Fahrer als Reaktion auf das Ergreifen der einen der Folgereferenzlinien durch die Ergreifungsfunktion benachrichtigt,
eine Betriebsfunktion für automatisches Fahren, die eine Anfrage auf Übergang für automatisches Fahren durch einen manuellen Betrieb ausgibt, und
eine Funktion des Gebens eines Startbefehls für automatisches Fahren an die Steuerfunktion für automatisches Fahren als Reaktion auf die Anfrage auf Übergang für automatisches Fahren, die von der Betriebsfunktion für automatisches Fahren ausgegeben wird, wenn die eine der Folgereferenzlinien ergriffen wird und eine Azimutabweichung zwischen dem Azimut von der einen der Folgereferenzlinien, die zum automatischen Fahren verwendet werden, und dem Azimut eines Maschinenkörpers (10) gleich oder weniger als ein vorbestimmter Wert ist.

6. Ernteprogramm nach Anspruch 5, ferner umfassend:
eine Kartenerstellungsfunktion für die Außenseite, die eine Karte für die Außenseite erstellt, die für eine Außenkontur des Außenumfangsbereiches (SA) bezeichnend ist, und
eine Grenzüberschreitungs-Bestimmungsfunktion, die die Möglichkeit, dass der Maschinenkörper eine Grenzüberschreitung einer Feldgrenzlinie durchführt, basierend auf der Karte der Außenseite und der von der Maschine bestimmten Position ermittelt.

7. Ernteprogramm nach Anspruch 5 oder 6, wobei die Berechnungsfunktion für Folgereferenzlinien die Folgereferenzlinie (L2) parallel zu der Anfangsreferenzlinie (Ls) und die weitere Folgereferenzlinie (L3) parallel zu der Folgereferenzlinie (L2) nacheinander berechnet und das Übergangsfahren zum Wenden ein Kehrtwendefahren umfasst.

8. Ernteprogramm nach Anspruch 5 oder 6, wobei:
die Berechnungsfunktion für Folgereferenzlinien die Folgereferenzlinie (L2) und die weitere Folgereferenzlinie (L3) nacheinander derart berechnet, dass eine Fahrtrajektorie parallel zu jeder Seite der polygonalen Form erstellt wird, die die Außenkontur des unbearbeiteten Bereiches (CA) darstellt, und
das Übergangsfahren zum Wenden ein besonderes Wenden umfasst, das ein Maschinenkörperwenden für einen Winkel durchführt, der von angrenzenden Seiten der polygonalen Form gebildet wird.

9. Computerlesbares Aufzeichnungsmedium, das das Ernteprogramm nach einem der Ansprüche 5 bis 8 aufzeichnet.

## Revendications

1. Moissonneuse en mesure d'effectuer des déplacements automatisés et des déplacements manuels, comprenant :
une section de création de carte de côté intérieur (422b) configurée pour créer, sur la base d'une forme extérieure d'une zone de circonférence extérieure (SA), des données de carte de côté intérieur indiquant une forme polygonale d'une zone non travaillée (CA) située à l'intérieur de la zone de circonférence extérieure (SA), la zone de circonférence extérieure (SA) étant créée sur la circonférence extérieure d'un champ par un déplacement de travail de récolte en circonférence en déplacement manuel ;
une section de calcul de ligne de référence initiale (411) configurée pour calculer, à partir des données de carte de côté intérieur, une ligne de référence initiale (Ls) qui est parallèle à un côté de la zone non travaillée (CA) et qui relie deux points limites (P1, P2) entre la zone de circonférence extérieure (SA) et la zone non travaillée (CA) ;
une section de calcul de ligne de référence suivante (412) configurée pour calculer une ligne de référence suivante (L2) à la suite de la ligne de référence initiale (Ls) et une ligne de référence suivante supplémentaire (L3) à la suite de la ligne de référence suivante (L2) ;
une section de commande de déplacement automatisé (512) configurée pour exécuter le déplacement automatisé sur la base d'un itinéraire de déplacement et d'une position de la machine, l'itinéraire de déplacement étant constitué de la ligne de référence initiale (Ls) et des lignes de référence suivantes (L2, L3) ; et
une section de commande de déplacement manuel (511) configurée pour exécuter, sur la base d'un signal de fonctionnement manuel, un déplacement de transition de virage pour passer d'un déplacement automatisé utilisant l'une des lignes de référence à un déplacement automatisé utilisant l'une des lignes de référence suivantes ;
la moissonneuse étant **caractérisée en ce qu'**elle comprend en outre :
une section de gestion de déplacement automatisé (514) configurée pour prendre l'une des lignes de référence suivantes pendant le déplacement de transition de virage ;
une section de notification (56) configurée pour informer un conducteur en réponse à la prise de l'une des lignes de référence suivantes par la section de gestion de déplacement automatisé (514) ; et
un outil d'actionnement de déplacement automatisé (93) configuré pour émettre une demande de transition de déplacement automatisé par le biais d'une opération manuelle,
dans laquelle si l'une des lignes de référence suivantes est prise et qu'une divergence d'azimut entre l'azimut de l'une des lignes de référence suivantes utilisée pour le déplacement automatisé et l'azimut d'un corps de machine (10) est égale ou inférieure à une valeur prédéterminée, une instruction de démarrage de déplacement automatisé est donnée à la section de commande de déplacement automatisé (512) en réponse à la demande de transition de déplacement automatisé émise par l'outil d'actionnement de déplacement automatisé (93).

2. Moissonneuse selon la revendication 1, comprenant en outre :
une section de création de carte de côté extérieur (422a) configurée pour créer une carte de côté extérieur indiquant un contour extérieur de la zone de circonférence extérieure (SA) ; et
une section de détermination de franchissement de frontière (53) configurée pour déterminer la possibilité du franchissement de frontière d'une limite d'un champ par le corps de machine, sur la base des données de carte de côté extérieur et de la position de la machine.

3. Moissonneuse selon la revendication 1 ou 2, dans laquelle la section de calcul de ligne de référence suivante (412) est configurée pour calculer la ligne de référence suivante (L2) parallèle à la ligne de référence initiale (Ls) et la ligne de référence suivante supplémentaire (L3) parallèle à la ligne de référence suivante (L2) l'une après l'autre, et le déplacement de transition de virage comprend un déplacement de demi-tour.

4. Moissonneuse selon la revendication 1 ou 2, dans laquelle :
la section de calcul de ligne de référence suivante (412) est configurée pour calculer la ligne de référence suivante (L2) et la ligne de référence suivante supplémentaire (L3) l'une après l'autre de manière à créer une trajectoire de déplacement parallèle à chaque côté de la forme polygonale représentant le contour extérieur de la zone non travaillée (CA) ; et
le déplacement de transition de virage comprend un virage spécial réalisant un virage de corps de machine à un angle formé par des côtés adjacents de la forme polygonale.

5. Programme de moisson utilisant une moissonneuse en mesure d'effectuer des déplacements automatisés et des déplacements manuels, le programme amenant un ordinateur à exécuter :
une fonction de création de carte de côté intérieur créant, sur la base d'une forme extérieure d'une zone de circonférence extérieure (SA), des données de carte de côté intérieur indiquant une forme polygonale d'une zone non travaillée (CA) située à l'intérieur de la zone de circonférence extérieure (SA), la zone de circonférence extérieure (SA) étant créée sur la circonférence extérieure d'un champ par un déplacement de travail de récolte en circonférence en déplacement manuel ;
une fonction de calcul de ligne de référence initiale calculant, à partir des données de carte de côté intérieur, une ligne de référence initiale (Ls) qui est parallèle à un côté de la zone non travaillée (CA) et qui relie deux points limites (P1, P2) entre la zone de circonférence extérieure (SA) et la zone non travaillée (CA) ;
une fonction de calcul de ligne de référence suivante calculant une ligne de référence suivante (L2) à la suite de la ligne de référence initiale (Ls) et une ligne de référence suivante supplémentaire (L3) à la suite de la ligne de référence suivante (L2) ;
une fonction de commande de déplacement automatisé exécutant le déplacement automatisé sur la base d'un itinéraire de déplacement et d'une position de la machine, l'itinéraire de déplacement étant constitué de la ligne de référence initiale (Ls) et des lignes de référence suivantes (L2, L3) ; et
une fonction de commande de déplacement manuel exécutant, sur la base d'un signal de fonctionnement manuel, un déplacement de transition de virage pour passer d'un déplacement automatisé utilisant l'une des lignes de référence à un déplacement automatisé utilisant l'une des lignes de référence suivantes le long desquelles la moissonneuse doit se déplacer à la suite de l'itinéraire de déplacement ;
le programme de moisson étant **caractérisé en ce qu'**il amène en outre un ordinateur à exécuter :
une fonction de prise qui prend l'une des lignes de référence suivantes pendant le déplacement de transition de virage ;
une fonction de notification informant un conducteur en réponse à la prise de l'une des lignes de référence suivantes par la fonction de prise ;
une fonction d'actionnement de déplacement automatisé émettant une demande de transition de déplacement automatisé par le biais d'une opération manuelle ; et
une fonction donnant une instruction de démarrage de déplacement automatisé à la fonction de commande de déplacement automatisé en réponse à la demande de transition de déplacement automatisé émise par la fonction d'actionnement de déplacement automatisé, si l'une des lignes de référence suivantes est prise et qu'une divergence d'azimut entre l'azimut de l'une des lignes de référence suivantes utilisée pour le déplacement automatisé et l'azimut d'un corps de machine (10) est égale ou inférieure à une valeur prédéterminée.

6. Programme de moisson selon la revendication 5, comprenant en outre :
une fonction de création de carte de côté extérieur créant une carte de côté extérieur indiquant un contour extérieur de la zone de circonférence extérieure (SA) ; et
une fonction de détermination de franchissement de frontière déterminant la possibilité du franchissement de frontière d'une limite d'un champ par le corps de machine, sur la base de la carte de côté extérieur et de la position de la machine.

7. Programme de moisson selon la revendication 5 ou 6, dans lequel la fonction de calcul de ligne de référence suivante calcule la ligne de référence suivante (L2) parallèle à la ligne de référence initiale (Ls) et la ligne de référence suivante supplémentaire (L3) parallèle à la ligne de référence suivante (L2) l'une après l'autre, et le déplacement de transition de virage comprend un déplacement de demi-tour.

8. Programme de moisson selon la revendication 5 ou 6, dans lequel :
la fonction de calcul de ligne de référence suivante calcule la ligne de référence suivante (L2) et la ligne de référence suivante supplémentaire (L3) l'une après l'autre de manière à créer une trajectoire de déplacement parallèle à chaque côté de la forme polygonale représentant le contour extérieur de la zone non travaillée (CA) ; et
le déplacement de transition de virage comprend un virage spécial réalisant un virage de corps de machine à un angle formé par des côtés adjacents de la forme polygonale.

9. Support d'enregistrement lisible par ordinateur enregistrant le programme de moisson de l'une des revendications 5 à 8.
